# FASCICULE DE BREVET EUROPEEN

(11) **EP 1 692 853 B1**
(45) Date de publication et mention de la délivrance du brevet: **18.06.2008**
(21) Numéro de dépôt: 04816502.1
(22) Date de dépôt: 02.12.2004
(51) Int. Cl.: H04M 3/56

(54) **SYSTEME DE CONFERENCES MULTIMEDIA**
MULTIMEDIA-KONFERENZSYSTEM
MULTIMEDIA CONFERENCE SYSTEM

(30) Priorité: 05.12.2003 FR 0350991
(43) Date de publication de la demande: 23.08.2006
(73) Titulaire: FRANCE TELECOM, 75015 Paris (FR)
(72) Inventeur: KELLER, Joaquin, F-75018 PARIS (FR)
(74) Mandataire: Simon, Viviane
(86) Numéro de dépôt international: PCT/FR2004/050640
(87) Numéro de publication internationale: WO 2005/057896

(56) Documents cités:
- WO-A-03/055187
- WO-A-03/055188
- US-A- 5 903 637
- US-A1- 2003 156 697
- US-B1- 6 608 820

## Description

### DOMAINE TECHNIQUE ET ART ANTERIEUR

L'invention concerne le domaine des systèmes de conférences à distance.

Un tel système est connu du document WO 03/034235.

Dans ce document, il faut disposer d'un terminal spécifique.

D'autres méthodes existantes (les méthodes classiques) proposent des solutions d'établissement de conférences plus complexes à l'usage et/ou plus coûteuses pour l'utilisateur et des solutions de facturation plus complexes à l'usage et/ou plus coûteuse à la fois pour l'utilisateur et l'opérateur du système.

La méthode proposé par la demande internationale WO 03/055188 permet, à partir d'une base de donnée comportant pour chaque conférence la date et l'heure de début de la conférence, la liste des participants composé par un ou plusieurs numéro de téléphone par participant, d'établir automatique à l'heure de début indiqué une conférence téléphonique entre tous les participants listés en établissement une communication entre le pont de conférence téléphonique et, pour chaque participant, le téléphone indiqué par son numéro. Si, pour un participant, plusieurs numéros de téléphone sont indiqués, les numéros seront tentés dans l'ordre indiqué jusqu'à établissement d'une communication entre le participant et le pont de conférence téléphonique.

La demande internationale WO 03/055187 propose une autre méthode d'établissement automatique de conférence téléphonique.

Il se pose le problème de trouver d'autres systèmes permettant d'établir simplement une téléconférence, ou une conférence à distance, notamment de type multimédia.

### EXPOSÉ DE L'INVENTION

L'invention concerne d'abord un dispositif de gestion de conférences à distance en association avec une conférence téléphonique, comportant :
- des moyens pour recevoir, d'un pont de conférence téléphonique, des données de présence de participants à une conférence téléphonique, dites données de présence audio,
- des moyens de mémorisation pour mémoriser, par exemple sous forme d'une base de données, des données de numéros de téléphone d'utilisateurs et des données identifiant un appareil d'utilisateur, chaque donnée identifiant un appareil d'un utilisateur étant associée avec une donnée de numéro de téléphone dudit utilisateur chaque donnée identifiant un appareil d'utilisateur étant associée,
- des moyens pour déterminer, à l'aide des données de présence audio et des données mémorisées, des appareils d'utilisateurs participant à la conférence téléphonique.

Ce dispositif peut en outre comporter des moyens pour envoyer des données de conférence aux dispositifs de participants à une conférence et/ou des moyens pour identifier une requête d'envoi de données de conférence à un appareil d'un participant à une conférence.

L'invention concerne également un système de gestion de conférences à distance, comportant un pont téléphonique de conférences téléphoniques, un serveur de conférences en association avec une conférence téléphonique, le pont téléphonique fournissant au serveur des données relatives à la présence d'un utilisateur en conférence téléphonique, le serveur associant chaque utilisateur présent en conférence téléphonique à une téléconférence.

L'invention concerne aussi un serveur de conférences à distance en association avec une conférence téléphonique, comportant un dispositif de gestion tel que décrit ci-dessus apte à déterminer des appareils d'utilisateurs (20, 22, 24) participant à la conférence téléphonique.

Des moyens peuvent être prévus pour déterminer quel type de données, parmi les données de conférence, peuvent être fournies à un appareil d'un participant à une conférence.

De même, des moyens peuvent être prévus pour envoyer, à chaque appareil d'utilisateur identifié comme participant à une conférence, des données relatives aux appareils d'autres utilisateurs également participant à la conférence. Les divers appareils peuvent alors échanger des données entre eux, sans sollicitation du dispositif de gestion ou du serveur.

L'invention concerne aussi un procédé de gestion de conférences à distance en association avec une conférence téléphonique, comportant :
- la réception, par un dispositif de gestion de conférences, de données provenant d'un pont de conférence téléphonique, et concernant la présence de participants à une conférence téléphonique, dites données de présence audio,
- la détermination d'appareils d'utilisateurs participant à la conférence téléphonique, à l'aide des données de présence audio et de données mémorisées identifiant un appareil d'utilisateur, chaque donnée identifiant un appareil d'un utilisateur étant associée avec une donnée de numéro de téléphone dudit utilisateur.

C'est donc sur la base de la participation à une conférence téléphonique qu'une conférence peut être établie via un dispositif de gestion ou un serveur selon l'invention.

Des données de présence audio peuvent être mises à jour dès qu'un utilisateur modifie son état de présence ou d'absence à une conférence.

L'utilisateur peut alors, ou bien recevoir des données autres que les données audio, par exemple multimédia, via le dispositif de gestion, avec ou sans requête spécifique, ou bien ce dernier peut fournir à cet utilisateur, ou à son appareil terminal, l'identification des appareils ou des terminaux des utilisateurs présents dans la conférence, ces divers utilisateurs échangeant alors directement des données sans passer par le serveur.

L'invention permet donc aux participants à une conférence téléphonique de disposer d'une conférence multimédia avec les mêmes participants que la conférence téléphonique.

### BRÈVE DESCRIPTION DES FIGURES

- La figure 1 représente un système de conférences selon l'invention,
- la figure 2 représente des étapes d'un procédé d'établissement de conférences selon l'invention,
- les figures 3 à 5 illustrent une réalisation d'un système et d'un procédé selon l'invention.

### EXPOSÉ DETAILLE DE MODES DE REALISATION DE L'INVENTION

On désigne par « conférence multimédia » une conférence permettant à ses participants d'échanger et de partager tout type de données (vidéo, son, documents écrits, images, etc. ...). Ces données peuvent être échangées et/ou partagées de manière synchrone ou asynchrone. A titre d'échanges ou de partage synchrone, on peut citer la projection de transparents ou de vidéos, les participants qui le désirent voyant et/ou entendant simultanément la même chose, ou de vidéos en temps réel comme dans une visioconférence multipoints classique, ou encore l'édition conjointe de documents.

Une conférence multimédia selon l'invention s'appuie sur un réseau d'échange de données, par exemple le réseau Internet.

Des ordinateurs, connectés à ce réseau, permettent l'acquisition, et/ou l'envoi, et/ou l'acheminement, et/ou la réception et/ou la restitution, notamment l'affichage, de données de conférence, autres que les données audios échangées par le réseau téléphonique.

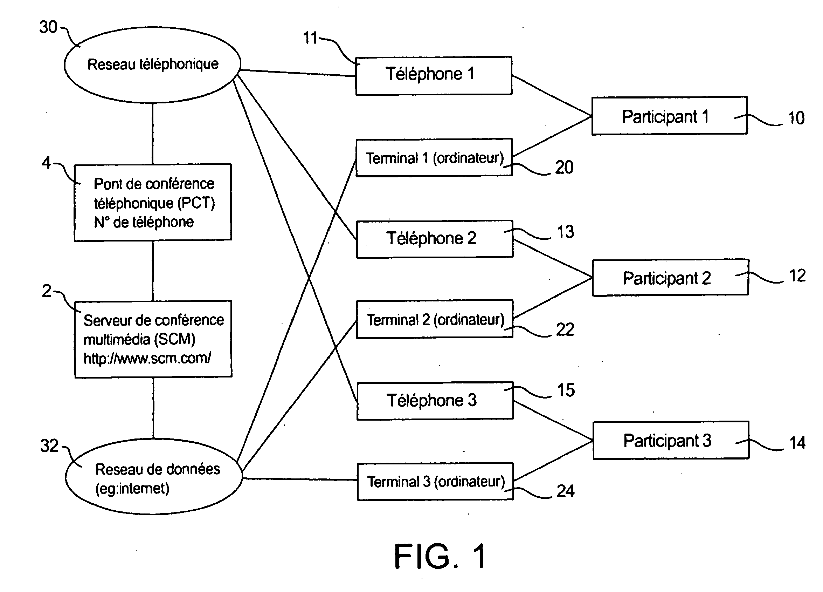

Un premier mode de réalisation de l'invention est illustré sur la figure 1.

Un ordinateur 2, ou serveur de conférences multimédia, est relié à un pont de conférence téléphonique 4, les références 30 et 32 désignant respectivement un réseau téléphonique et un réseau de données, tel que le réseau Internet.

Lorsqu'un utilisateur appelle le pont 4, en particulier s'il y a plus d'une conférence sur le pont il saisit éventuellement un identifiant de la conférence téléphonique.

Si les lignes téléphoniques des participants disposent d'une fonction de présentation du numéro appelant, le pont 4 de conférence téléphonique peut connaître directement, le numéro de téléphone de l'utilisateur appelant et participant à la conférence téléphonique.

Le serveur 2 obtient ensuite, par une interface de gestion ou de supervision du pont 4, les numéros de téléphones de participants 10, 12, 14 à la conférence téléphonique.

Les interfaces de gestion de pont audio permettent la récupération des données suivantes :
a) Liste des conférences en cours identifiées par un identifiant (« CONFS » = ID).
b) Liste des participants de chaque conférence, identifiés par leur numéro de téléphone.

Le numéro de téléphone d'un appelant permet donc de retrouver ses co-participants, sa conférence téléphonique durant laquelle les échanges sont en mode audio.

Ces interfaces peuvent être interrogées et commandées à distance.

Les ordinateurs 20, 22, 24 des utilisateurs sont associés, dans le serveur 2, à ces numéros de téléphone : ou bien des données d'identification de chaque appareil 20 - 24, en association avec le numéro de téléphone correspondant, sont préalablement mémorisées dans le serveur, par exemple sous forme d'une base de données, ou bien chaque appareil d'utilisateur fournit ces données au serveur 2 lors d'une demande d'établissement d'une conférence ou lors d'une demande d'accès à une conférence déjà établie.

L'association de l'ordinateur au poste téléphonique peut se faire par la fourniture, à l'ordinateur de l'utilisateur, du numéro de téléphone associé au poste téléphonique.

Cette fourniture se fait soit par saisie manuelle par l'utilisateur, soit par un autre procédé si le poste téléphonique et l'ordinateur sont reliés entre eux et si le téléphone connaît son propre numéro.

Par exemple un téléphone mobile d'un utilisateur peut disposer d'une liaison hertzienne ou infrarouge avec l'ordinateur de cet utilisateur.

Dès lors que le serveur 2 a identifié, à l'aide de l'information fournie par le pont 4, qu'un utilisateur s'est connecté en mode audio, cet utilisateur et son appareil peuvent recevoir des données autres (multimédia) relatives à une conférence.

Le serveur 2 de conférence multimédia pourra alors envoyer ces données directement au terminal 20 qui les demande.

Le serveur 2 pourra aussi communiquer les identifiants réseau des terminaux participants à un ou plusieurs, éventuellement à chacun, des terminaux des autres participants, qui pourront ainsi établir entre eux des communications point à point.

Selon l'invention des utilisateurs peuvent donc établir une conférence multimédia en association à une conférence téléphonique.

L'utilisateur établit une conférence téléphonique en téléphonant à un numéro particulier (celui du pont 4 de conférence téléphonique).

Le mode opératoire est donc d'abord le mode opératoire d'un pont de conférence téléphonique, une conférence, par exemple multimédia, étant ensuite accessible sur l'ordinateur de l'utilisateur associé au poste téléphonique de ce même utilisateur.

Deux modes de fonctionnement de ce système sont donc possibles, éventuellement simultanément.

Selon un premier mode de fonctionnement, les ordinateurs ou les terminaux 20 - 24 des participants obtiennent, uniquement sur requête présentée au serveur, les données de conférence qui sont échangées et/ou partagées. Ces données sont donc demandées par les appareils ou terminaux 20, 22, 24 des participants au serveur 2 de conférences multimédia, à intervalles réguliers ou sur sollicitation de l'utilisateur participant à la conférence.

La demande prend la forme d'une requête spécifique adressée au serveur. Lors de chaque demande, le terminal demandant fournit au serveur 2 un identifiant permettant à ce dernier de l'identifier et de déterminer à quelle conférence multimédia il appartient et à quelles données il a droit ou il a besoin d'avoir accès.

Pour obtenir cet identifiant le terminal 20 a effectué une demande d'identifiant au serveur 2, par exemple une première demande avec laquelle il a envoyé le numéro de téléphone qui lui est associé, ainsi que d'éventuelles informations cryptographiques, par exemple un mot de passe.

L'identifiant peut être l'adresse IP du terminal, ou le numéro de téléphone correspondant, ou un autre identifiant lorsqu'aucun de ces deux identifiants n'est possible.

Selon un second mode de fonctionnement, les terminaux 20 - 24 sont en attente de réception de données de conférence, par exemple des données de type multimédia.

Un terminal effectue une demande d'identifiant comme dans le mode précédent, mais il envoie, en plus du numéro téléphonique, son identifiant réseau, par exemple son adresse IP. Ce peut être un autre identifiant si il n'est pas sur un réseau IP.

Selon ce deuxième mode, dès que des données de conférence sont disponibles dans le serveur 2, elles sont transmises à chaque appareil de participant à la conférence, sans requête spécifique de ce dernier, grâce à l'information sur l'identifiant réseau.

Un appareil participant à une conférence peut être utilisé par plusieurs personnes participant à la conférence. Par exemple, une salle de réunion équipée pour une visioconférence peut être équipée d'un unique appareil utilisé par plusieurs personnes intervenant dans la conférence.

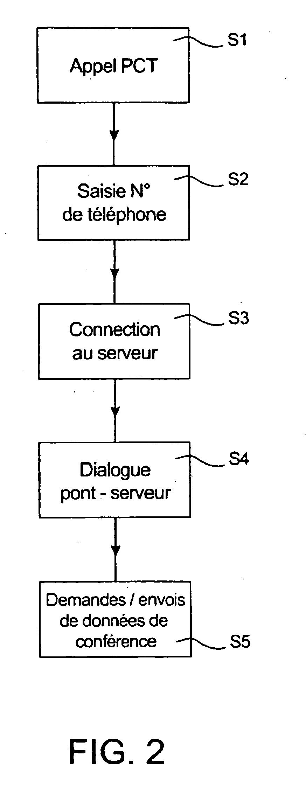

Un exemple de procédé selon l'invention, ou d'utilisation d'un système selon l'invention, va être décrit en liaison avec la figure 2.

Dans une première étape (S1), chacun des participants 10 - 14, à l'aide de son téléphone 11, 13, 15, entre en communication avec le pont 4 ; une conférence téléphonique classique est ainsi établie.

Le numéro de téléphone de chaque utilisateur est connu ou mémorisé par son propre terminal. Avant, ou après, cette étape S1, chaque participant peut saisir son numéro de téléphone dans son propre terminal (étape S2, représentée sur la figure 2 après S1).

Chaque participant connecte ensuite son terminal (étape S3) au serveur 2, grâce à un navigateur Web par exemple. Chaque terminal 20 - 24 peut ainsi envoyer au serveur 2 des informations sur lui-même et/ou le participant correspondant.

Le serveur 2 fait alors l'association entre les numéros de téléphones et les terminaux.

Ces phases S1 - S3 peuvent se faire dans n'importe quel ordre.

Ensuite (étape S4) le serveur 2 et le pont 4 dialoguent pour permettre au serveur de connaître les participants à la conférence téléphonique.

Cette phase se répète aussi souvent que nécessaire pour que les données du serveur 2 soient à jour, au fur et à mesure que les participants entrent ou sortent de la conférence téléphonique.

Le serveur 2 peut donc connaître, en permanence, les terminaux 20 - 24 participant à cette conférence.

En particulier, dès qu'une communication téléphonique est interrompue, l'utilisateur correspondant est identifié comme sorti de la conférence téléphonique, l'information correspondante est transmise au serveur 2, et l'envoi, ou la mise à disposition, à cet utilisateur et par le serveur, de données.de conférence est interrompue.

En cas de conférence point à point de plusieurs appareils, dont l'un d'eux est identifié à un certain moment comme sorti, les autres appareils sont informés de la sortie de cet appareil ou de ce terminal et tout échange de données avec ce dernier est interrompu.

Au cours d'une étape S5, les terminaux envoient des données multimédia qu'ils désirent échanger ou partager. Cet échange peut se faire selon l'un des modes décrits ci-dessus.

Selon le premier mode, les terminaux peuvent interroger le serveur 2 pour obtenir les données multimédia correspondant à leur conférence multimédia.

Le serveur 2 envoie alors aux terminaux, sur requête de ceux-ci, des données multimédia de leur conférence grâce aux identifiants réseau des terminaux, identifiants qui sont connus du serveur comme expliqué ci-dessus.

Dans le second mode, le serveur 2 envoie des données à chacun des participants, sans requête spécifique de ceux-ci, ou bien chaque terminal peut disposer, en dialoguant avec le serveur 2, d'informations sur les terminaux d'autres participants, dont leur identifiant réseau respectif. Les terminaux envoient alors directement (liaison point à point) à d'autres terminaux des données multimédia, par exemple des flux vidéo en provenance d'une caméra installée sur le terminal.

Ces dernières étapes peuvent se produire simultanément et/ou dans n'importe quel ordre.

Dans certains cas, un terminal n'est pas connecté directement au réseau de données support de la conférence multimédia.

C'est le cas par exemple de terminaux connectés à un réseau privé domestique ou d'entreprise et se connectant au réseau de données support de la conférence (eg : internet public) via une passerelle, par exemple NAT ou proxy-http.

Dans ce cas là, le terminal ne dispose pas d'identifiant réseau.

Il peut interroger le serveur et les terminaux connectés directement mais pas toujours recevoir des données non directement sollicitées. Dans ce cas particulier, le terminal ne peut pas participer à la conférence selon le second mode exposé ci-dessus, c'est-à-dire en attendant des données relatives à la conférence. Il peut, par contre, participer à une conférence selon le premier mode, c'est-à-dire en envoyant au serveur des requêtes de transmission de données.

La facturation de la conférence multimédia peut se faire en utilisant le système de facturation de la conférence téléphonique.

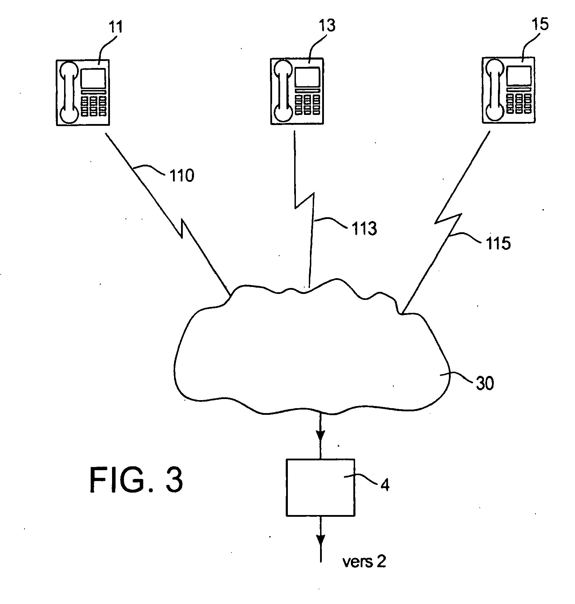

Un ensemble de moyens pour mettre en oeuvre la présente invention va être décrit en liaison avec les figures 3 à 5.

Sur ces figures, des références identiques ou similaires à celles de la figure 1 y désignent des éléments identiques. Les flèches 110, 113, 115 représentent des appels de chacun des postes téléphoniques 11, 13, 15 au pont 4 via le réseau 30.

Les informations relatives à la présence du, ou des, utilisateur(s) sont transmises au serveur 2, comme expliqué ci-dessus, celui-ci disposant d'une interface spécifique (voir interface de gestion et de supervision ci-dessus) lui permettant un dialogue avec le pont 4.

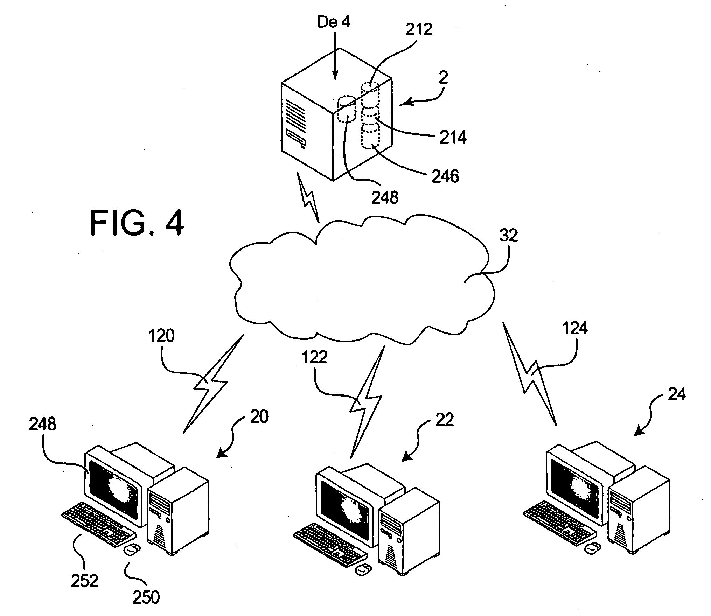

Sur la figure 4, la référence 2 désigne l'ordinateur ou le serveur de gestion de conférence, auquel les différents utilisateurs, possédant chacun, outre le poste téléphonique 11, 12, 15, de la figure 3, un micro-ordinateur de type PC 20, 22, 24,..., peuvent se connecter ou avoir accès, via un réseau 32, par exemple l'Internet.

Chacun des utilisateurs accède au réseau par sa propre connexion 120, 122, 124... et possède sa propre adresse.

Le serveur mémorise dans des moyens de mémorisation 42 les données relatives aux numéros de téléphone 11, 13, 15 et aux terminaux 20, 22, 24, comme déjà expliqué ci-dessus.

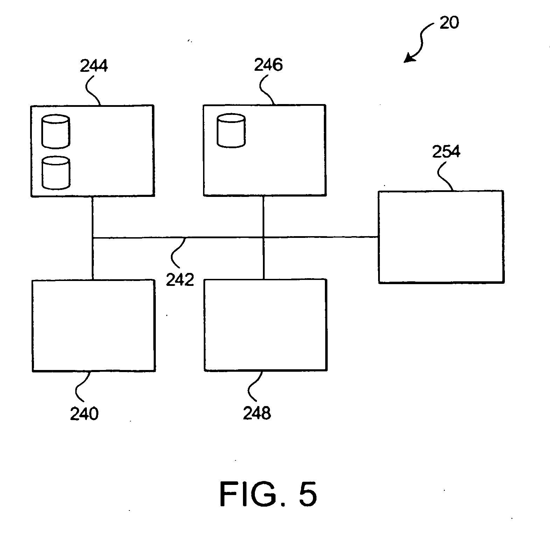

La figure 5 représente schématiquement, en bloc, les diverses composantes du micro-ordinateur 20. Un microprocesseur 240 est relié, par un bus 242, à un ensemble de mémoires RAM 244 pour stocker des données, et à une mémoire ROM 246 dans laquelle des instructions de programme peuvent être mémorisées. Ce système comporte en outre un dispositif de visualisation 248, ou écran, et des moyens périphériques 250 (clavier) ou 252 (souris).

La référence 254 désigne des moyens d'interface avec le réseau, de type modem. Les autres appareils 22, 24, peuvent avoir la même constitution.

D'une manière générale, chaque appareil d'utilisateur comporte des moyens pour visualiser des données de téléconférence, notamment de type multimédia et par exemple transmises par l'ordinateur 2, via le réseau 30 et les moyens de communication et/ou de transmission 120, 122, 124. Il comporte également des moyens 50 pour entrer des données, telles que par exemple des données relatives à des numéros de téléphone, ces données étant transmises à l'ordinateur ou au serveur 10 par les mêmes moyens de communication et/ou de transmission.

Le serveur a, globalement, une structure du même type, avec processeur(s), zones de stockage de données (d'ailleurs désignées sur la figure 4 par les références 42, 44, 46, 48), connexion au réseau 30, et interface de connexion au pont 4.

Dans une des zones mémoires du serveur sont mémorisées les données ou instructions de programme pour mettre en oeuvre un procédé selon l'invention, et notamment pour, en fonction de données reçues par le pont 4, relatives à la présence de participants à une conférence téléphonique, et en fonction des données relatives aux numéros de téléphone et des données d'identification d'appareils d'utilisateur, déterminer les appareils 20, 22, 24 à inclure dans, ou participant à, une conférence.

Sont également mémorisées les données ou instructions de programme pour envoyer ou mettre à disposition des participants à une conférence, selon l'un ou l'autre des deux modes exposés ci - dessus, des données de cette conférence, par exemple des données multimédia. Sont également mémorisées les données ou instructions de programme pour mettre en oeuvre un procédé tel que décrit ci-dessus en liaison avec la figure 2.

Ces données ou instructions peuvent être transférées dans une zone mémoire du serveurs à partir d'une disquette ou de tout autre support pouvant être lu par un micro-ordinateur, (par exemple: disque dur, mémoire morte ROM, mémoire vive dynamique DRAM ou tout autre type de mémoire RAM, disque optique compact, élément de stockage magnétique ou optique).

## Revendications

1. Dispositif (2) d'établissement de conférences à distance en association avec une conférence téléphonique, comportant :
- des moyens pour recevoir, d'un pont de conférence téléphonique (4), des données de présence de participants (10 - 14) à une conférence téléphonique, dites données de présence audio,
- des moyens (242, 244, 246, 248) de mémorisation pour mémoriser des données de numéro de téléphone d'utilisateurs et des données identifiant un appareil d'utilisateur (20 - 24), chaque donnée identifiant un appareil d'un utilisateur étant associée avec une donnée de numéro de téléphone dudit utilisateur,
- des moyens (240) pour déterminer, à l'aide des données de présence audio et des données mémorisées, des appareils d'utilisateurs (20, 22, 24) participant à la conférence téléphonique.

2. Dispositif selon la revendication 1, les moyens de mémorisation mémorisant une base de données de numéros de téléphone et d'identification d'appareils d'utilisateurs.

3. Dispositif selon la revendication 1 ou 2, comportant en outre des moyens (240, 254) pour envoyer des données de conférence aux dispositifs de participants à une conférence.

4. Dispositif selon l'une des revendications 1 à 3, comportant en outre des moyens (240) pour identifier une requête d'envoi de données de conférence à un appareil d'un participant à une conférence.

5. Dispositif selon l'une des revendications 1 à 4, comportant en outre des moyens (240) pour déterminer quel type de données, parmi les données de conférence, peuvent être fournies à un appareil d'un participant à une conférence.

6. Dispositif selon l'une des revendications 1 à 5, comportant en outre des moyens (240, 254) pour envoyer, à chaque appareil d'utilisateur identifié comme participant à une conférence, des données relatives aux appareils d'autres utilisateurs également participant à la conférence.

7. Serveur de conférences à distance en association avec une conférence téléphonique, comportant un dispositif d'établissement selon l'une des revendications 1 à 6 apte à déterminer des appareils d'utilisateurs (20, 22, 24) participant à la conférence téléphonique.

8. Procédé d'établissement de conférences à distance en association avec une conférence téléphonique, comportant :
- la réception, par un dispositif (2) de gestion de conférences, de données provenant d'un pont de conférence téléphonique (4), et concernant la présence de participants (10 - 14) à une conférence téléphonique, dites données de présence audio,
- la détermination d'appareils d'utilisateurs (20, 22, 24) participant à la conférence téléphonique, à l'aide des données de présence audio et de données mémorisées identifiant un appareil d'utilisateur (20 - 24), chaque donnée identifiant un appareil d'un utilisateur étant associée avec une donnée de numéro de téléphone dudit utilisateur.

9. Procédé selon la revendication 8, des données de présence audio étant communiquées du pont de conférence (4) au dispositif de gestion (2) dès qu'un utilisateur modifie sa présence à une conférence téléphonique.

10. Procédé selon la revendication 8 ou 9, des données de conférence étant adressées à un appareil (20 - 24) d'un participant à la conférence sur requête de celui-ci.

11. Procédé selon la revendication 8 ou 9, des données de conférence étant adressées à un appareil (20 - 24) d'un participant à la conférence sans requête spécifique de celui-ci.

12. Procédé selon l'une des revendications 8 à 11, des données d'identification d'appareils d'autres utilisateurs participant à la conférence étant adressées à au moins un participant à la conférence.

13. Procédé selon l'une des revendications 8 à 12, les données mémorisées identifiant un appareil d'utilisateur (20 - 24), en relation avec les données de numéro de téléphone, étant envoyées au dispositif (2) de gestion par chaque appareil (20 - 24) lors d'une requête d'établissement de conférence ou lors d'une requête d'accès à une conférence déjà existante.

14. Procédé selon l'une des revendications 8 à 12, les données mémorisées identifiant un appareil d'utilisateur (20 - 24), en relation avec les données de numéro de téléphone, étant préalablement mémorisées dans le dispositif de gestion (2), avant une requête d'établissement de conférence ou une requête d'accès à une conférence déjà existante.

15. Programme d'ordinateur comportant des instructions pour mettre en oeuvre un procédé selon l'une des revendications 8 à 14.

16. Support de données pouvant être lu par un ordinateur comportant des données d'instructions pour mettre en oeuvre un procédé selon l'une des revendications 8 à 14.

## Claims

1. Device (2) for setting up remote conferences in association with a telephone conference, comprising:
- means for receiving, from a telephone conference bridge (4), presence data regarding participants (10 - 14) in a telephone conference, termed audio presence data,
- storage means (242, 244, 246, 248) for storing user telephone number data and data identifying a user apparatus (20 - 24), each data item identifying an apparatus of a user being associated with a telephone number data item of said user,
- means (240) for determining, with the aid of the audio presence data and the stored data, user apparatuses (20, 22, 24) participating in the telephone conference.

2. Device according to Claim 1, the storage means storing a user telephone number and apparatus identification database.

3. Device according to Claim 1 or 2, furthermore comprising means (240, 254) for sending conference data to the devices of participants in a conference.

4. Device according to one of Claims 1 to 3, furthermore comprising means (240) for identifying a request to send conference data to an apparatus of a participant in a conference.

5. Device according to one of Claims 1 to 4, furthermore comprising means (240) for determining which type of data, among the conference data, can be provided to an apparatus of a participant in a conference.

6. Device according to one of Claims 1 to 5, furthermore comprising means (240, 254) for sending, to each user apparatus identified as participating in a conference, data relating to the apparatuses of other users also participating in the conference.

7. Server for remote conferences in association with a telephone conference, comprising a setting-up device according to one of Claims 1 to 6 able to determine user apparatuses (20, 22, 24) participating in the telephone conference.

8. Method for setting up remote conferences in association with a telephone conference, comprising:
- the reception, by a conference management device (2), of data originating from a telephone conference bridge (4), and relating to the presence of participants (10 - 14) in a telephone conference, termed audio presence data,
- the determination of user apparatuses (20, 22, 24) participating in the telephone conference, with the aid of the audio presence data and of stored data identifying a user apparatus (20 - 24), each data item identifying an apparatus of a user being associated with a telephone number data item of said user.

9. Method according to Claim 8, audio presence data being communicated from the conference bridge (4) to the management device (2) as soon as a user modifies his presence at a telephone conference.

10. Method according to Claim 8 or 9, conference data being addressed to an apparatus (20 - 24) of a participant in the conference at the request of said participant.

11. Method according to Claim 8 or 9, conference data being addressed to an apparatus (20 - 24) of a participant in the conference without any specific request by said participant.

12. Method according to one of Claims 8 to 11, data for identifying apparatuses of other users participating in the conference being addressed to at least one participant in the conference.

13. Method according to one of Claims 8 to 12, the stored data identifying a user apparatus (20 - 24), in conjunction with the telephone number data, being dispatched to the management device (2) by each apparatus (20 - 24) upon a conference setup request or upon a request to access an already existing conference.

14. Method according to one of Claims 8 to 12, the stored data identifying a user apparatus (20 - 24), in conjunction with the telephone number data, being stored beforehand in the management device (2), before a conference setup request or a request to access an already existing conference.

15. Computer program comprising instructions for implementing a method according to one of Claims 8 to 14.

16. Data medium that can be read by a computer comprising data of instructions for implementing a method according to one of Claims 8 to 14.

## Patentansprüche

1. Vorrichtung (2) für den Aufbau von Telekonferenzen in Verbindung mit einer Telefonkonferenz, die aufweist:
- Mittel, um von einer Telefonkonferenzbrücke (4) Präsenzdaten von Teilnehmern (10-14) an einer Telefonkonferenz zu empfangen, AudiopräsenzDaten genannt,
- Speichermittel (242, 244, 246, 248), um Telefonnummer-Daten von Benutzern und Daten zu speichern, die einen Benutzerapparat (20, 24) identifizieren, wobei jeder einen Benutzerapparat identifizierende Datenwert einem Telefonnummer-Datenwert des Benutzers zugeordnet ist;
- Mittel (240), um mit Hilfe der AudiopräsenzDaten und der gespeicherten Daten Benutzerapparate (20, 22, 24) zu bestimmen, die an der Telefonkonferenz teilnehmen.

2. Vorrichtung nach Anspruch 1, wobei die Speichermittel eine Bank von Telefonnummern-Daten und von Identifikations-Daten von Benutzerapparaten speichern.

3. Vorrichtung nach Anspruch 1 oder 2, die weiter Mittel (240, 254) aufweist, um Konferenzdaten an die Vorrichtungen von Konferenzteilnehmern zu senden.

4. Vorrichtung nach einem der Ansprüche 1 bis 3, die weiter Mittel (240) aufweist, um eine Anforderung zum Senden von Konferenzdaten an einen Apparat eines Konferenzsteilnehmers zu identifizieren.

5. Vorrichtung nach einem der Ansprüche 1 bis 4, die weiter Mittel (240) aufweist, um zu bestimmen, welcher Typ von Daten unter den Konferenzdaten an einen Apparat eines Konferenzteilnehmers geliefert werden können.

6. Vorrichtung nach einem der Ansprüche 1 bis 5, die weiter Mittel (240, 254) aufweist, um an jeden Benutzerapparat, der als an einer Konferenz teilnehmend identifiziert wird, Daten bezüglich der Apparate anderer Benutzer zu senden, die ebenfalls an der Konferenz teilnehmen.

7. Telekonferenzserver in Verbindung mit einer Telefonkonferenz, der eine Aufbauvorrichtung nach einem der Ansprüche 1 bis 6 aufweist, die in der Lage ist, Benutzerapparate (20, 22, 24) zu bestimmen, die an der Telefonkonferenz teilnehmen.

8. Verfahren zum Aufbau von Telekonferenzen in Verbindung mit einer Telefonkonferenz, das aufweist:
- den Empfang, durch eine Konferenz-Verwaltungsvorrichtung (2), von Daten, die von einer Telefonkonferenzbrücke (4) stammen und die Präsenz von Teilnehmern (10, 14) an einer Telefonkonferenz betreffen, Audiopräsenzdaten genannt,
- die Bestimmung von Benutzerapparaten (20, 22, 24), die an der Telefonkonferenz teilnehmen, mit Hilfe der Audiopräsenzdaten und von gespeicherten Daten, die einen Benutzerapparat (20 - 24) identifizieren, wobei jeder einen Benutzerapparat identifizierende Datenwert einem Telefonnummer-Datenwert des Benutzers zugeordnet ist.

9. Verfahren nach Anspruch 8, wobei Audiopräsenzdaten von der Konferenzbrücke (4) an die Verwaltungsvorrichtung (2) übermittelt werden, sobald ein Benutzer seine Präsenz bei einer Telefonkonferenz ändert.

10. Verfahren nach Anspruch 8 oder 9, wobei Konferenzdaten an einen Apparat (20 - 24) eines Konferenzteilnehmers auf dessen Anforderung übermittelt werden.

11. Verfahren nach Anspruch 8 oder 9, wobei Konferenzdaten an einen Apparat (20 - 24) eines Konferenzteilnehmers ohne spezifische Anforderung durch diesen übermittelt werden.

12. Verfahren nach einem der Ansprüche 8 bis 11, wobei Identifikationsdaten von Apparaten anderer an der Konferenz teilnehmender Benutzer an mindestens einen Konferenzteilnehmer übermittelt werden.

13. Verfahren nach einem der Ansprüche 8 bis 12, wobei die gespeicherten Daten, die einen Benutzerapparat (20 - 24) identifizieren, in Verbindung mit den Telefonnummer-Daten, bei einer Anforderung eines Konferenzaufbaus oder bei einer Zugangsanforderung zu einer bereits existierenden Konferenz von jedem Apparat (20 - 24) an die Verwaltungsvorrichtung (2) gesendet werden.

14. Verfahren nach einem der Ansprüche 8 bis 12, wobei die gespeicherten Daten, die einen Benutzerapparat (20 - 24) identifizieren, in Verbindung mit den Telefonnummer-Daten, vor einer Anforderung eines Konferenzaufbaus oder einer Zugangsanforderung zu einer bereits existierenden Konferenz vorab in der Verwaltungsvorrichtung (2) gespeichert werden.

15. Computerprogramm, das Anweisungen enthält, um ein Verfahren nach einem der Ansprüche 8 bis 14 anzuwenden.

16. Datenträger, der durch einen Computer gelesen werden kann, der Anweisungsdaten enthält, um ein Verfahren nach einem der Ansprüche 8 bis 14 anzuwenden.
